# EUROPEAN PATENT APPLICATION

(11) **EP 3 023 271 A1**
(43) Date of publication of application: **25.05.2016**
(21) Application number: 15155205.6
(22) Date of filing: 16.02.2015
(51) Int. Cl.: B60C 27/06

(54) **INFLATABLE NON-SLIP DEVICE FOR MOTOR VEHICLE TYRES**

(30) Priority: 28.10.2014 ES 201431400 U
(71) Applicant: De Paz Ucedo, Benito, 28025 Madrid (ES)
(72) Inventor: De Paz Ucedo, Benito, 28025 Madrid (ES)
(74) Representative: Lahidalga de Careaga, Jose Luis

(57) **Abstract**

Non-slip inflatable device for motor vehicle tyres based on a device which covers the tread of the tyre and which has elements on its outside face making it non-slip, and characterised because the device as such is of a low-rise straight, rectangular, elongated parallelepiped-shaped inflatable resistant element.

## Description

### PURPOSE OF THE INVENTION

The invention proposed refers to a non-slip inflatable device for motor vehicle tyres consisting of a component that fits onto the tyre tread on whose external surface there are elements to make it non-slip. Said device is secured to the tyre under pressure as the device is inflated.

### FIELD OF THE INVENTION.

The field of the invention is that of manufacturers of motor vehicle accessories, and is of utility within the motor vehicle sector.

### BACKGROUND OF THE INVENTION

There are some predecessors of the system described in these specifications, but all those examined are mechanical in nature and in no case has the existence been noted of any device of a pneumatic nature which can be removed immediately.

The inventor is unaware of any forerunner incorporating the elements of this invention nor the benefits brought by said elements.

### DESCRIPTION OF THE INVENTION

The invention proposed refers to a non-slip inflatable device for motor vehicle tyres of the sort consisting of a device overlaying the tyre tread and which has elements on its external face which make it non-slip.

Said device is attached to the tyre under pressure when the device is inflated, and the device as such is made of an inflatable resistant element with a small straight, rectangular, elongated parallelepiped shape showing an external face on the device in the form of tread on which the non-slip elements can be made out. Said non-slip elements, protecting the device tread and secured on the outside of said device, are made of plates whose external area contains non-slip elements such as nails, pyramids or any other element which may fulfil a non-slip function in friction on ice, snow or mud surfaces.

On the outside lower face, which is in contact with the external surface of the tyre, and to ensure that the device is not moved by the effect of the running of the tyre, some protuberances are provided on said outside lower face of the device, one of which, inserted in the tyre grooves, will prevent the device from moving.

The device includes an inflation valve so that, when the device is deflated, it is easy to slide along the tyre tread to place it in its working position and, once in that position, with the aid of a gas bottle or manual pump, the valve is used to inflate the device which is fixed in its working position.

The device also includes an upper, lateral resistant zone comprising an internal metal mesh which covers the sides and tread so that running does not cause the device to lose its shape outwards, causing the unit to lose its dynamic characteristics.

Said device may also be fitted with attachment tabs on the resistant side surfaces and which can be used to moor external tightening elements should this be necessary, to secure the device.

Inside the device there are internal reinforcements in the form of lugs made of resistant material and located all around the circumference of the device and of sufficient height to prevent the two sides of the device from coming into contact, possibly losing their characteristics.

Said reinforcements, of variable dimensions, will never impede the circulation of the inflating air pressure.

Attachment elements are found as a component connecting the two ends of the device, each comprising resistant strips with a cylindrical drillhole in the middle, and located facing each other on the opposing abutted faces of the ends of the device so that, when the two faces are joined, said cylindrical drillholes are aligned, enabling a connecting pin to be displaced to form a long bolt with an enlarged head and a thread at the other end, making it possible to close on the thread at the opposite end, using a wing-nut.

### DESCRIPTION OF THE DRAWINGS

For a better understanding of the invention, a page of plans is attached showing the following:

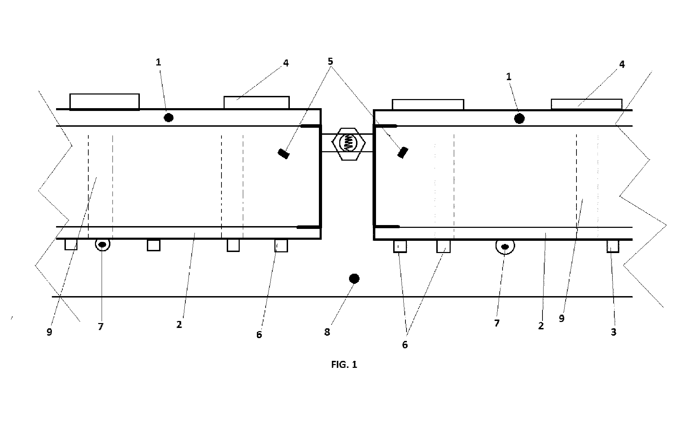

FIGURE 1.- A lateral diagrammatic view of the device.

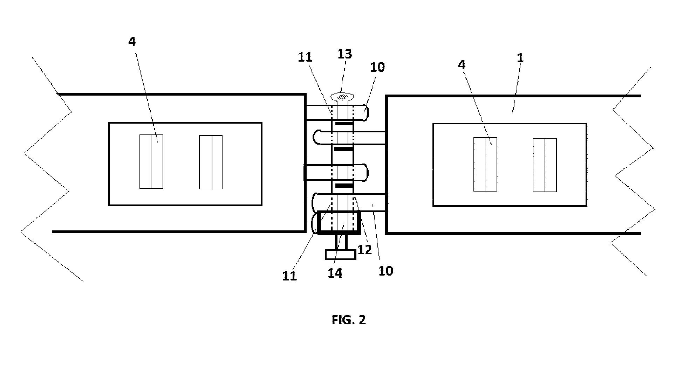

FIGURE 2.- A diagrammatic ground view of the assembled device.

Identical components are denominated in said figures with the same reference, among which the following may be distinguished:
(1).- outside face,
(2).- outside lower face,
(3).- inflation valve,
(4).- non-slip external protectors,
(5).- resistant side faces,
(6).- interior protuberances,
(7).- securing tabs,
(8).- tyre,
(9).- interior reinforcements,
(9).- interior device reinforcements,
(10).- hook elements,
(11).- cylindrical drillhole,
(12).- connecting pin,
(13).- connecting pin head,
(14).- threaded closing wing-nut

### A PREFERENTIAL EMBODIMENT OF THE INVENTION.

The invention proposed refers to a non-slip inflatable device for motor vehicle tyres of the sort comprising a device that covers the tyre tread and which has elements on its outside face to make it non-slip. Said device is secured to the tyre under pressure when the device is inflated, said device itself consisting of a resistant element of inflatable resistant form, with a low-rise straight, rectangular, elongated parallelepiped shape, where the following elements can be made out:
(1).- the outside face of the device like a tread on which the non-slip elements are visible.
(2).- the lower outside face, in contact with the outside face of the tyre (8).
   To prevent the device from moving as a result of the effect of the running of the tyre, protuberances (6) are included on said lower outside face (2) of the device one of which, inserted in the grooves of the tyre (8), will prevent the device from moving.
(3).- inflation valve. There is an inflation valve for the device so that, when said device is deflated, it is easy to slide along the tyre tread, to move it into its working position.
   Once in its working position, the device is fixed in its working position with the aid of a gas bottle or manual pump, through the valve.
(4).- exterior non-slip protectors.
   These protectors, secured on the outside of the device (19) consist of plates with non-slip elements on their outside, such as nails, pyramids or any other element which may fulfil a non-slip function in friction on ice, snow or mud surfaces.
(5).- a resistant zone consisting of an inside metal mesh covering the sides and the tread so that the effect of running does not cause the device to lose its shape in an outward direction and so lose its dynamic characteristics.
(6).- internal protuberances for attachment to the outside face of the tyre (8), in the form of small polyhedral resistant elements able to fit into the grooves of a standard tyre.
(7).- connecting tabs on the resistant lateral faces (5) to attach external tightening components if needed to secure the device.
(9).- internal reinforcements on the device, consisting of resistant material lugs located around the entire circumference of the device and high enough to prevent the two faces of the device coming into contact and possibly losing their characteristics.
   Said reinforcements, of variable dimensions, will never prevent the circulation of the inflating air pressure.
(10).- securing components each comprising resistant strips with a cylindrical drillhole (11) in the middle and located opposite the opposing faces of the abutted ends of the device so that, when the two faces are joined, said cylindrical drillholes are axially aligned.
(11).- a cylindrical drillhole located in the middle part of the securing elements (10).
(12).- a connecting pin, formed by a long screw with an enlarged head (13) and threaded at the other end.
(13).- the head of the connecting pin, formed by widening the pin so that its dimensions are greater than the diameter of the drillhole (10).
(14).- the wing-nut of the threaded close of the pin (12).

Having sufficiently described the nature of the invention and its practical implementation, it must be recorded that the foregoing specifications represented in the attached drawings may be modified in detail, provided that does not alter their fundamental principles pursuant to the previous paragraphs and summarised in the following claims.

## Claims

1. **A NON-SLIP INFLATABLE DEVICE FOR MOTOR VEHICLE TYRES** based on a device which covers the tread of the tyre and which has elements on its outside face making it non-slip, and characterised because the device as such is of a low-rise straight, rectangular, elongated parallelepiped-shaped inflatable resistant element where the following elements can be observed:
(1).- the outside face of the device like a tread on which the non-slip elements are visible.
(2).- the lower outside face, in contact with the outside face of the tyre (8).
(3).- inflation valve. There is an inflation valve for the device so that, when said device is deflated, it is easy to slide along the tyre tread, to move it into its working position.
Once in its working position, the device is fixed in its working position with the aid of a gas bottle or manual pump, through the valve.
(4).- exterior non-slip protectors.
These protectors, secured on the outside of the device (19) consist of plates with non-slip elements on their outside, such as nails, pyramids or any other element which may fulfil a non-slip function in friction on ice, snow or mud surfaces.
(5).- a resistant zone consisting of an inside metal mesh covering the sides and the tread so that the effect of running does not cause the device to lose its shape in an outward direction and so lose its dynamic characteristics.
(6).- internal protuberances for attachment to the outside face of the tyre (8), in the form of small polyhedral resistant elements able to fit into the grooves of a standard tyre.
(7).- connecting tabs on the resistant lateral faces (5) to attach external tightening components.
(9).- internal reinforcements on the device, consisting of resistant material lugs located around the entire circumference of the device and high enough to prevent the two faces of the device coming into contact.
(10).- securing components each comprising resistant strips with a cylindrical drillhole (11) in the middle and located opposite the opposing faces of the abutted ends of the device so that, when the two faces are joined, said cylindrical drillholes are axially aligned.
(11).- a cylindrical drillhole located in the middle part of the securing elements (10).
(12).- a connecting pin, formed by a long screw with an enlarged head (13) and threaded at the other end.
(13).- the head of the connecting pin, formed by widening the pin so that its dimensions are greater than the diameter of the drillhole (10).
(14).- the wing-nut of the threaded close of the pin (12).

2. **A NON-SLIP INFLATABLE DEVICE FOR MOTOR VEHICLE TYRES** based on a device which covers the tread of the tyre and which has elements on its outside face making it non-slip as set forth in claim 1, and characterised because once the two ends of the device are joined using the attachment elements (10) or the pin (12), the device is inflated with the help of a gas bottle or a manual pump which fixes it in its working position.
